Europäisches Patentamt

European Patent Office

Office européen des brevets

(19)

(11) Publication number: **0 448 289 A2**

# (12) EUROPEAN PATENT APPLICATION

(21) Application number: **91302171.3**

(22) Date of filing: **14.03.91**

(51) Int. Cl.⁵: **H04N 5/067**

(30) Priority: **19.03.90 US 495197**

(43) Date of publication of application:
**25.09.91 Bulletin 91/39**

(84) Designated Contracting States:
**DE FR GB**

(71) Applicant: **The Grass Valley Group, Inc.**
**13024 Bitney Springs Road**
**Nevada City California 95959 (US)**

(72) Inventor: **Fairhurst, Jon**
**166 Stinson Drive**
**Grass Valley, California 95959 (US)**

(74) Representative: **Molyneaux, Martyn William et
al**
**c/o Ladas & Parry Isartorplatz 5**
**W-8000 Munich 2 (DE)**

(54) Television signal encoder.

(57) A television video encoder combines the components of a component video signal to produce an encoded video signal representing an active video portion of a composite video signal. An envelope signal having shaped leading and trailing edges is generated from an external reference signal. The envelope signal is used to mix the encoded video signal with sync and burst signals, generated from the external reference signal, and with a blanking signal to produce the composite video signal. The same technique is used to generate a component television signal with sync and blanking envelopes.

EP 0 448 289 A2

FIG.1

## TELEVISION SIGNAL ENCODER

### Background of the Invention

The present invention relates to signal encoding, and more specifically to a television signal encoder for generating a composite television signal from a component television signal or for adding sync and blanking envelopes to the component television signal.

An encoded video signal has a chrominance component, formed by modulating quadrature components of a subcarrier frequency, and a luminance component that is added to the chrominance component. To the encoded video signal is added sync, burst and blanking signals to produce a composite television signal for transmission. Prior television signal encoders, such as the CV-25 encoder manufactured by The Grass Valley Group, Inc. of Grass Valley, California, United States of America, were analog devices. Analog devices have many limitations, such as drift, noise and crosstalk, and do not lend themselves well to advanced processing techniques. A digital encoder is disclosed in co-pending U.S. Patent Application Serial No. 294,235 filed on January 9, 1989 for producing an encoded video signal free from various chrominance and luminance crosstalk errors, but without the addition of the sync, burst and blanking signals needed to produce the composite television signal for transmission.

What is desired is a television signal encoder for generating a composite television signal from a component television signal complete with sync, burst and blanking components that maintains accuracy free of drift, noise and crosstalk or for adding sync and blanking envelopes to the component television signal while maintaining high accuracy.

### Summary of the Invention

Accordingly the present invention provides a television signal encoder that generates a composite television signal from a component television signal complete with sync, burst and blanking components. The component television signal, in the form of three component video signals, is sampled by a system clock at four times the subcarrier frequency rate. These three channels, which may represent either green, blue and red signals or luminance and two chrominance signals, are matrixed, filtered, modulated and combined digitally to produce an encoded video signal. The encoded video signal is then processed with synchronizing information, such as sync, burst and blanking, to produce the composite television signal for transmission. An envelope generator produces an envelope of sine-squared shape having controlled rise and fall times and a range from a value of zero to a value of one. The resulting envelope is used to combine the encoded video signal with the sync, burst and blanking components to produce the desired composite television signal. Sync and blanking envelopes may be added to a simple component television signal in the same manner without adding burst to the signal.

The objects, advantages and other novel features of the present invention are apparent from the following detailed description when read in conjunction with the appended claims and attached drawing.

### Brief Description of the Drawing

Fig. 1 is a block diagram of a television signal encoder according to the present invention.

Fig. 2 is a timing diagram for the television signal encoder of Fig. 1.

Fig. 3 is a block diagram of another embodiment of the television signal encoder for adding sync and blanking to a component television signal according to the present invention.

Fig. 4 is a timing diagram for the television signal encoder of Fig. 3.

### Description of the Preferred Embodiment

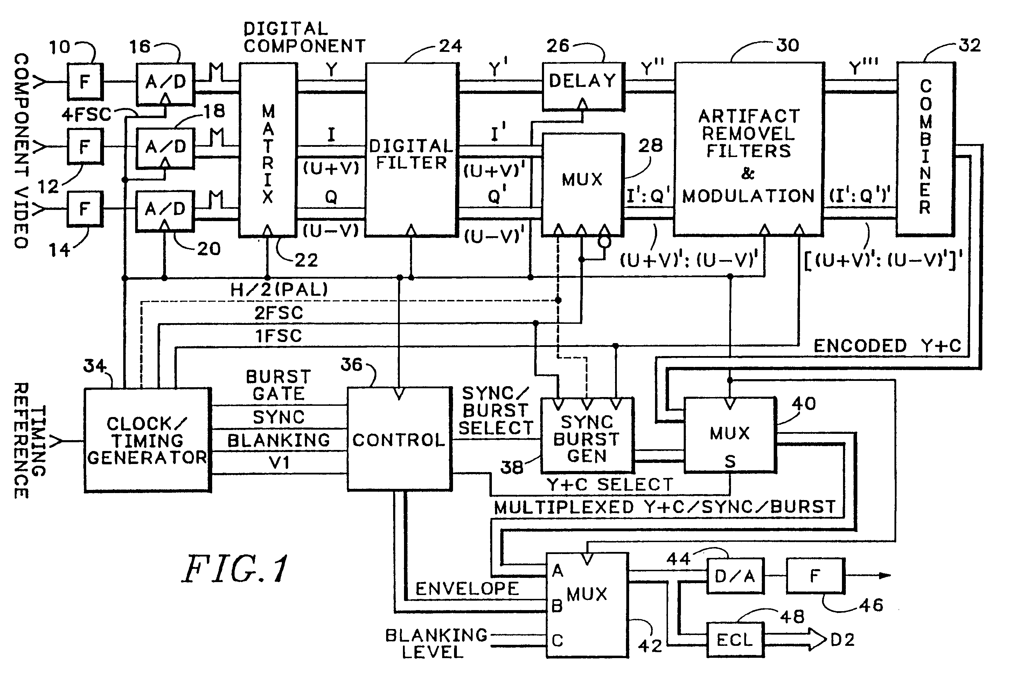

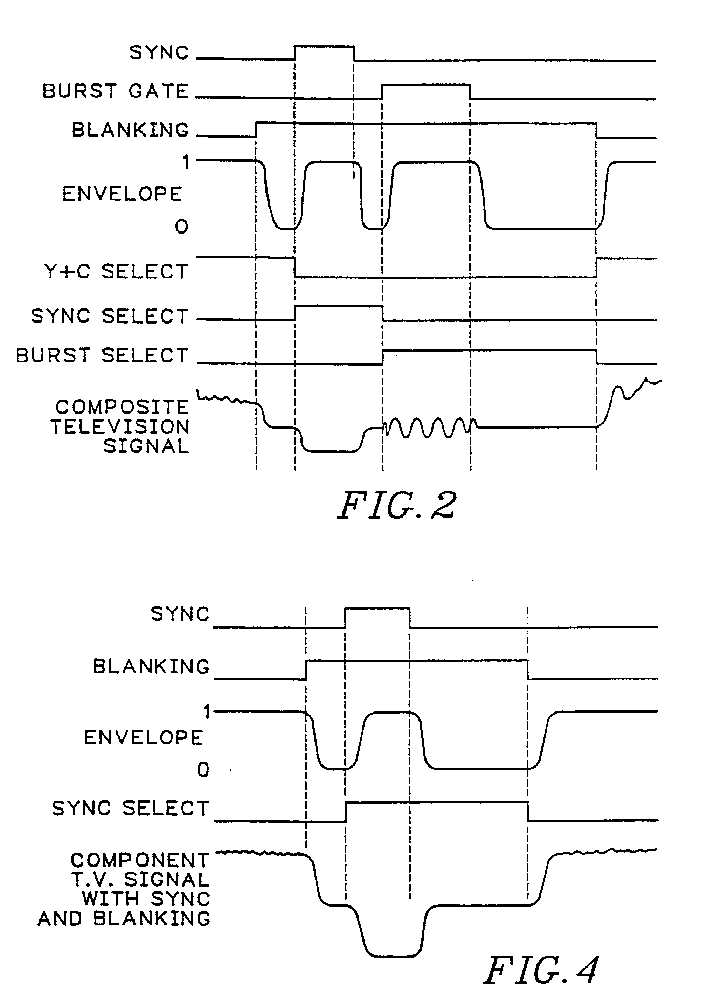

Referring now to Figs. 1 and 2 an analog component video signal has three components, either RGB, YIQ or YUV, that are individually filtered by respective filters 10, 12, 14 and digitized at four times the subcarrier frequency rate by respective analog to digital converters 16, 18, 20. The digitized components, either from the analog component video signal as described or directly from a component digital signal source, are input to a matrix 22 to produce the desired luminance and two chrominance components, YIQ for NTSC or Y,U+V,U-V for PAL, to be combined to produce an encoded video signal. These signals may be filtered by digital filters 24 to provide correct NTSC or PAL chrominance bandwidths and, optionally, to boost the high frequency detail in luminance, Y, to provide detail enhancement. The chrominance components, IQ or U+V,U-V, are combined/multiplexed by multiplexer 28 while the luminance component, Y, is delayed by delay circuit 26 to compensate for the corresponding chrominance processing delay. The delayed luminance and the multiplexed chrominance components are input to an artifact removal filter/modulator circuit 30 to prefilter the components to remove aliasing artifacts and "modulate" the chrominance components with a subcarrier frequency. The filtered luminance and modulated chrominance components are then combined in a combiner 32 to produce an encoded video signal, Y+C, that represents the active video portion of a composite television signal.

The clocks and timing signals for the encoder are generated by a clock/timing generator 34 from an input external timing reference signal. Three clock signals, 4fsc, 2fsc and 1fsc, and four control signals, BURST GATE, composite SYNC, BLANKING and a color frame reset (V1), are generated. The clock signals provide timing for the various circuits of the encoder while the control signals are used to generate an envelope signal and select signals for combining the encoded video signal with a composite sync signal, a burst signal and a blanking signal to produce the composite television signal. The V1 signal is used to reset a controller 36 every four fields for NSTC or every eight fields for PAL. The control signals are input to the controller 36, which in turn produces the envelope signal, a control signal for a sync/burst generator 38, and a select signal for a multiplexer 40. In response to the control signal the sync/burst generator 38 outputs either a sync tip pulse or a sinusoidal digital burst signal. The sync tip pulse or burst signal form one input to the multiplexer 40 and the encoded video signal forms another input. The select signal selects either the encoded video signal or the sync tip pulse/burst signal as the output from the multiplexer 40. The output of the multiplexer 40 together with a blanking signal BLNKG are input to a mixer 42 where they are combined under control of the envelope signal. The mathematic function of the mixer 42 is A*B+C*(1-B), or (A-C)*B+C for implementation with a single multiplier, where A is one video signal, B is a control signal and C is the other video signal. The output of the mixer 42 is a digital composite television signal. The digital composite television signal may be converted to a D2 format differential digital signal by an ECL level converter 48, or may be converted to an analog composite television signal by a digital to analog converter 44 and filter 46.

As shown in Fig. 2 the blanking control signal starts at the backporch of a horizontal line and extends to the end of the front porch, i.e., during the non-active video portion of each horizontal line. During the vertical interval when there is no active video, the blanking control signal is always on. For each sync tip during each horizontal video line, the composite sync control signal provides a pulse, and for each burst interval the burst gate control signal provides a pulse. The resulting envelope signal is a pulsed signal having sine squared shaped leading and trailing edges. For the PAL television system this envelope signal changes phase with respect to subcarrier during each frame such that a 25Hz offset is created between the envelope signal and the subcarrier frequency. When the blanking control signal is off, the envelope signal has a value of one, and when the blanking signal is on the envelope signal has a value of zero in the absence of any other of the control signals. During the blanking interval the envelope signal becomes one during the sync control signal pulse and during the burst gate control signal pulse, returning to zero between these control signal pulses. The mixer 42 has as one input either the encoded video signal or the sync/burst signal from the multiplexer 40 as determined by the Y+C SELECT signal. A SYNC SELECT and a BURST SELECT signal determine whether the output of the sync/burst generator 38 is the sync tip pulse or the sinusoidal burst signal. The mixer 42 performs the function

$$X = A*B+(1-B)*C \text{ or } (A-C)*B+C$$

where X is the composite television signal, A is the encoded video input signal or the sync/burst signal, B is the envelope signal, and C is the blanking level.

At the beginning of the blanking control signal the envelope signal, B, goes to zero so that the output composite television signal goes to the blanking level since A*B is zero and (1-B)*C is one. During the sync/burst signal the envelope signal goes to one, A*B is one and (1-B)*C is zero and the sync tip is output. At the end of the sync tip the envelope signal returns to zero and the blanking level is output again. At the beginning of the burst signal the envelope signal goes to one so that the burst signal is output rather than the blanking signal. At the end of the burst gate the envelope signal returns to zero, returning the output to the blanking level. Finally at the end of the blanking inverval the envelope signal returns to one and the encoded video signal is output.

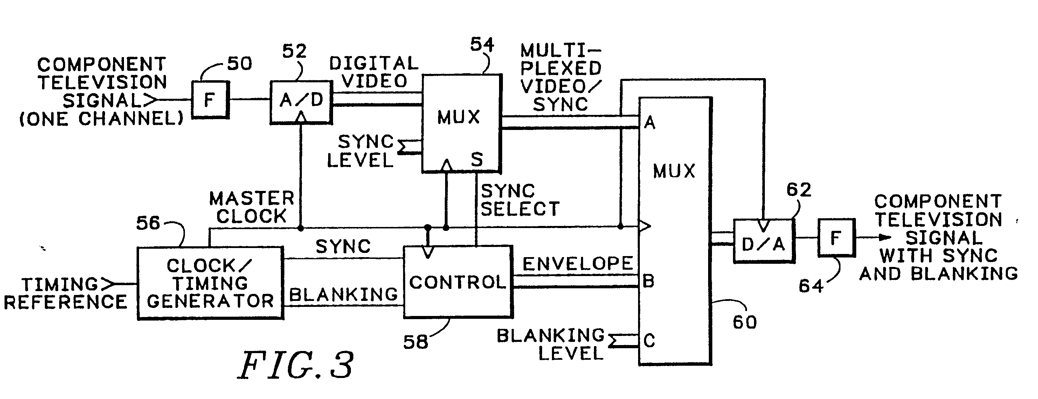

A modified version of the above is shown in Figs. 3 and 4 for adding sync and blanking envelopes to a simple component signal. One channel of a television component signal is filtered by a filter 50 and converted to a digitally sampled signal by an analog to digital converter 52 at a rate defined by a MASTER CLOCK from a clock/timing generator 56. MASTER CLOCK is of fixed frequency and is synchronous with the component television signal. Also generated by the clock/timing generator 56 are SYNC and BLANKING pulses that define the timing of sync and blanking to be combined with the digitally sampled video signal. These pulses are used by a control circuit 58 in order to provide a SYNC SELECT pulse and an envelope signal. The SYNC SELECT pulse controls a multiplexer 54 to combine the sync tip level with the digitized video and produce a multiplexed video and sync output. A mixer 60 provides a similar function to the mixer 42 of Fig. 1. By calculating X=(A-C)*B+C the mixer 60 uses the envelope signal to control the mix from video to blanking, blanking to sync, sync to blanking and blanking to video to create the desired component video signal with sync and blanking. The output of the mixer 60 is converted to analog by a digital to analog converter 62 and filtered by a filter 64 to create the component television signal with sync and blanking edges.

As shown in Fig. 4 the SYNC pulse edges correspond to the start of the falling and rising sync transitions. The BLANKING pulse edges correspond to the start of the falling and rising blanking transitions. SYNC SELECT is active during the interval from the start of the SYNC pulse to the end of the BLANKING pulse. These pulses trigger the envelope signal transitions. During active video the envelope signal equals one and the mixer outputs $X=(A-C)*1+C=A$, delivering the digital video signal to the output. When BLANKING begins the envelope signal transitions to zero and the mixer outputs $X=(A-C)*0+C=C$ to provide blanking. After sync is selected the envelope signal rises to one, providing sync to the output. When sync is complete the envelope falls to zero and the output returns to blanking. The sequence ends as digital video is selected by the multiplexer 54 and the envelope returns to one, once again providing the digital video at the output of the mixer 60. This output is converted to analog by the D/A 62 and filter 64 to provide the component television signal with sync and blanking.

Thus the present invention provides a composite video signal encoded from a component video signal by generating an envelope signal to combine an encoded active video signal with the necessary sync, burst and blanking signals.

## Claims

1. A video encoder comprising:

    means for generating (10-32) an encoded video signal representing an active video signal from an input component video signal;

    means for generating (34, 36) an envelope signal from an external reference signal, the envelope signal having shaped leading and trailing edges;

    means for generating (34-38) sync tip and burst signals from the external reference signal; and

    means for combining (40, 42) the sync tip signal, the burst signal and the encoded video signal with a blanking signal under control of the envelope signal to produce a composite video signal.

2. A video encoder as recited in claim 1 wherein the envelope signal generating means comprises:

    means for generating (34) a blanking gate, a sync gate and a burst gate signal from the external reference signal; and

    means for combining (36) the blanking gate, the sync gate and the burst gate signals to produce the envelope signal.

3. A video encoder comprising:

    means for combining (50-54) a component television signal with a sync level to produce a multiplexed video signal;

    means for generating (56, 58) an envelope signal from an external reference signal, the envelope signal having shaped leading and trailing edges; and

    means for mixing (60) the multiplexed video signal with a blanking level under control of the envelope signal to produce an output component television signal with sync and blanking envelopes.

4. A video encoder as recited in claim 3 wherein the generating means comprises:

    means for generating (56) a blanking pulse and a sync pulse from the external reference signal; and

    means for combining (58) the blanking pulse and the sync pulse to produce the envelope signal.

FIG.1

SYNC

BURST GATE

BLANKING

1

ENVELOPE

0

Y+C SELECT

SYNC SELECT

BURST SELECT

COMPOSITE
TELEVISION
SIGNAL

## FIG.2

SYNC

BLANKING

1

ENVELOPE

0

SYNC SELECT

COMPONENT
T.V. SIGNAL
WITH SYNC
AND BLANKING

## FIG.4

FIG.3